# EUROPÄISCHE PATENTSCHRIFT

(11) **EP 0 479 185 B1**
(45) Veröffentlichungstag und Bekanntmachung des Hinweises auf die Patenterteilung: **12.04.1995**
(21) Anmeldenummer: 91116640.3
(22) Anmeldetag: 30.09.1991
(51) Int. Cl.: B60R 21/16

(54) **Gassack für ein Rückhaltesystem in Fahrzeugen**
Airbag for a restraining system in vehicles
Coussin d'air pour un système de retenue dans des véhicules

(30) Priorität: 04.10.1990 DE 9013827 U
(43) Veröffentlichungstag der Anmeldung: 08.04.1992
(73) Patentinhaber: TRW Occupant Restraint Systems GmbH, 73553 Alfdorf (DE)
(72) Erfinder: Eyrainer, Heinz, W-7076 Waldstetten (DE); Brucker, Roland, W-7070 Schwäbisch Gmünd (DE)
(74) Vertreter: Degwert, Hartmut, Dipl.-Phys.

(56) Entgegenhaltungen:
- GB-A- 1 340 549
- PATENT ABSTRACTS OF JAPAN,Band 15, Nr. 474 (C-890)(5002) 3. Dezember 1991 & JP-A-3 205 094
- PATENT ABSTRACTS OF JAPAN& JP-A-3 167 045
- PATENT ABSTRACTS OF JAPAN,Band 14, Nr. 193 (M-963)(4136) 19. April 1990 & JP-A-2 037 060
- PATENT ABSTRACTS OF JAPAN,Band 13, Nr. 244 (M-834)(3592) 7. Juni 1989 & JP-A-1 052 554

## Beschreibung

Die Erfindung betrifft einen Gassack für ein Rückhaltesystem in Fahrzeugen, aus mehreren miteinander vernähten textilen Gewebeteilen. Ein derartiger Gassack, gemäß dem Oberbegriff des Anspruchs 1, ist beispielsweise aus der EP-A-0 344 422 bekannt.

Ein solcher Gassack wird im Notfalle durch einen pyrotechnischen Gasgenerator innerhalb von wenigen Millisekunden aufgeblasen. Er muß nicht nur kurzzeitig einem hohen Innendruck widerstehen, der durch den Aufprall des Fahrzeuginsassen noch erhöht wird, sondern auch den relativ hohen Temperaturen der durch den Gasgenerator erzeugten Gase.

Aus Gründen der einfachen Herstellung werden derartige Gassäcke üblicherweise aus mehreren textilen Gewebeteilen hergestellt, die durch Nähte miteinander verbunden werden. Auch diese Nähte müssen hohe Anforderungen hinsichtlich der mechanischen und der thermischen Beanspruchung erfüllen.

Bei einem aus der GB-A-1 340 549 bekannten, aus mehreren miteinander vernähten textilen Gewebeteilen bestehenden Gassack sind die miteinander vernähten Ränder der verschiedenen Gewebeteile teilweise verstärkt, um einem Auftrennen der gebildeten Säume entgegenzuwirken. Die Verstärkungen werden durch umgeschlagene Ränder und/oder durch zwischen den miteinander zu vernähenden Rändern vorgesehene Klebstoffschichten gebildet. Die auf diese Weise verstärkten Ränder der verschiedenen Gewebeteile sind schließlich durch mehrere Fäden miteinander vernäht.

In der ISO Norm Nr. 4915 ist eine Vielzahl unterschiedlicher Arten von textilen Nähten gezeigt, zu denen auch die Mehrstich-Zickzacknaht (Seite 27, Abbildungen 321 und 322) zählt.

Der Erfindung liegt die Aufgabe zugrunde, einen Gassack der eingangs angegebenen Art dahingehend weiterzubilden, daß die Nähte, durch welche die verschiedenen textilen Gewebeteile des Gassacks miteinander verbunden sind, besonders hohen mechanischen und thermischen Beanspruchungen standhalten, ohne den Aufwand für die Herstellung dieser Nähte merklich zu steigern.

Diese Aufgabe wird bei einem Gassack der eingangs angegebenen Art erfindungsgemäß dadurch gelöst, daß wenigstens eine der die Gewebeteile miteinander verbindenden Nähte als Mehrstich-Zickzacknaht ausgebildet ist. Es wurde gefunden, daß eine solche Mehrstich-Zickzacknaht eine überraschend hohe mechanische Festigkeit und Hitzebeständigkeit aufweist. Offenbar hat die versetzte Stichlage der Naht eine bezüglich der Gewebestruktur des Gassackmaterials versetzte Beanspruchungslinie und eine bessere Verteilung der Beanspruchung auf die Gewebefäden zur Folge. Dieser Effekt ist besonders ausgeprägt, wenn gemäß einer vorteilhaften Weiterbildung die durch die Mehrstich-Zickzacknaht miteinander verbundenen Gewebeteile verstürzt sind, d.h. ihre miteinander verbundenen Randstreifen zur Innenseite des Gassacks eingeschlagen und parallel gegeneinandergelegt sind. Die Überstände der Naht sind dann in vorteilhafter Weise auch im Inneren des Gassacks gelegen, so daß sie nicht störend in Erscheinung treten.

Wenn gemäß einer weiteren vorteilhaften Ausführungsform die Randbereiche der miteinander durch eine Mehrstich-Zickzacknaht verbundenen Gewebeteile umgefaltet sind und die Naht sich auch durch die umgefalteten Randstreifenteile erstreckt, ergibt sich eine Steigerung der mechanischen Beanspruchbarkeit, da Relativverschiebungen der übereinanderliegenden Gewebeteile dann nicht möglich sind.

Eine weitere vorteilhafte Ausführungsform, bei welcher die miteinander durch eine Mehrstich-Zickzacknaht verbundenen, verstürzten Gewebeteile wenigstens einen Randstreifen aufweisen, der auf die Rückseite des anderen Randstreifens umgefaltet ist, zeichnet sich nicht nur durch hohe mechanische und thermische Beanspruchbarkeit, sondern auch durch eine verbesserte Gasdichtigkeit aus.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: eine Perspektivansicht eines Gassacks für ein Rückhaltesystem in Fahrzeugen;
- Fig. 2: eine Perspektivansicht desselben Gassacks aus einer anderen Blickrichtung;
- Fig. 3: eine schematische Schnittansicht zweier miteinander durch eine Mehrfach-Zickzacknaht verbundener, verstürzter Gewebeteile des Gassacks;
- Fig. 4: eine Draufsicht auf die Mehrstich-Zickzacknaht;
- Fig. 5: eine schematische Schnittansicht einer Naht nach einer weiteren Ausführungsform;
- Fig. 6: eine schematische Schnittansicht einer Naht nach einer anderen Ausführungsform;
- Fig. 7: eine schematische Schnittansicht einer Naht bei einer weiteren Ausführungsform; und
- Fig. 8: eine Perspektivansicht eines Teils eines Gassacks im Bereich einer Naht, welche Anfang und Ende einer Umfangsgewebebahn des Gassacks miteinander verbindet; und
- Fig. 9: eine schematische Schnittansicht der Naht in Fig. 8.

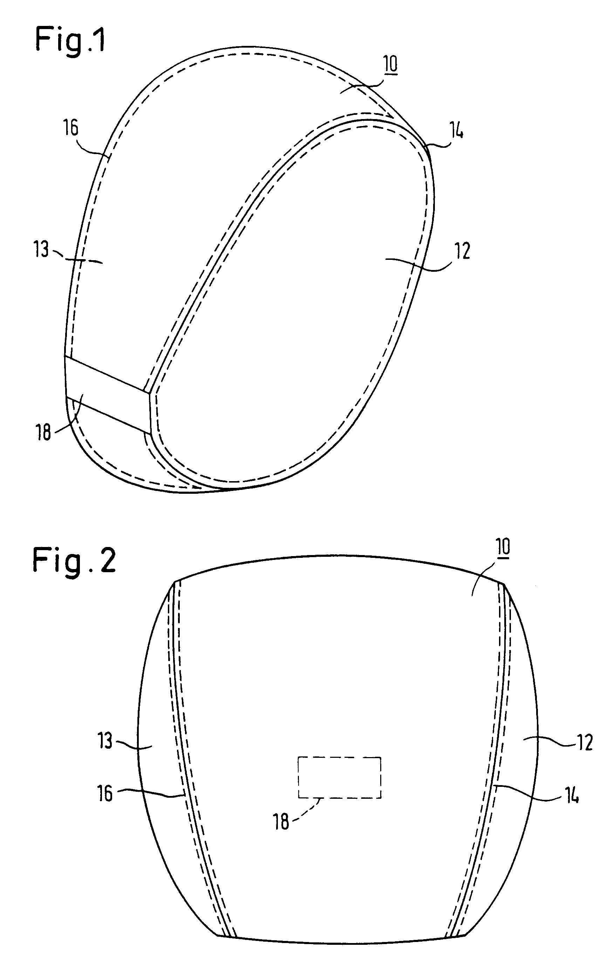

Der in den Figuren 1 und 2 gezeigte Gassack besteht aus einer Umfangsgewebebahn 10 und zwei Seitenteilen 12, 13, die an ihrem Außenumfang mit je einem Randstreifen der Umfangsgewebebahn 10 durch eine Naht 14 bzw. 16 verbunden sind. Anfang und Ende der Umfangsgewebebahn 10 begrenzen eine rechteckige Einblasöffnung 18.

Jede Naht 14, 16 ist als Mehrstich-Zickzacknaht ausgeführt. Unter einer Mehrstich-Zickzacknaht ist eine Naht zu verstehen, die in Draufsicht zickzackförmig ist und zwischen je zwei aufeinanderfolgenden Scheiteln, die auf einander gegenüberliegenden Seiten der Naht liegen, mehrere Stiche aufweist. Bei der gezeigten Ausführungsform sind zwischen zwei Scheiteln 15 jeweils zwei Stiche 17, 19 vorhanden. Die Breite B der Naht 14 beträgt vorzugsweise etwa 9 mm.

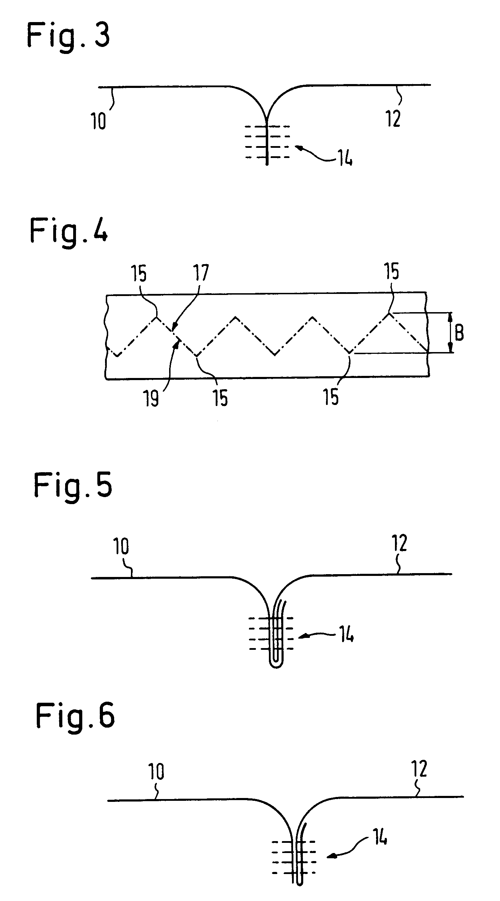

Gemäß der in Fig. 3 gezeigten Ausführungsform sind die miteinander verbundenen Randstreifen des Seitenteils 12 und der Umfangsgewebebahn 10 verstürzt, d.h. zum Inneren des Gassacks eingeschlagen und gegeneinandergelegt. Die Naht 14, welche die verstürzten Randstreifenteile miteinander verbindet, ist in Fig. 4 in Draufsicht gezeigt; es handelt sich um eine Mehrstich-Zickzacknaht.

Die Naht 16 kann in gleicher Weise wie die Naht 14 oder gemäß einer der nachstehend beschriebenen Ausführungsformen ausgebildet sein.

Bei der Ausführungsform nach Fig. 5 sind die miteinander verbundenen Randstreifenteile der Umfangsgewebebahn 10 und des Seitenteils 12 gleichfalls verstürzt, jedoch mit etwa doppelter Breite ausgeführt und übereinanderliegend in derselben Richtung umgefaltet. Die Mehrstich-Zickzacknaht erstreckt sich auch durch die umgefalteten Randstreifenbereiche hindurch. Sie ist in gleicher Weise wie in Fig. 4 gezeigt ausgeführt. Wie aus Fig. 5 ersichtlich, ist der Randstreifen des Seitenteils 12 auf sich selbst zurückgefaltet, während der Randstreifen der Umfangsgewebebahn 10 um den gefalteten Randstreifenbereich des Seitenteils 12 gefaltet ist. Bei dieser Ausführungsform ergibt sich neben einer besonders hohen mechanischen und thermischen Beanspruchbarkeit auch eine verbesserte Gasdichtigkeit der Naht.

Die Ausführungsform nach Fig. 6 unterscheidet sich von der nach Fig. 5 nur dadurch, daß lediglich der Randstreifen des Seitenteils 12 verbreitert und gefaltet ausgeführt ist.

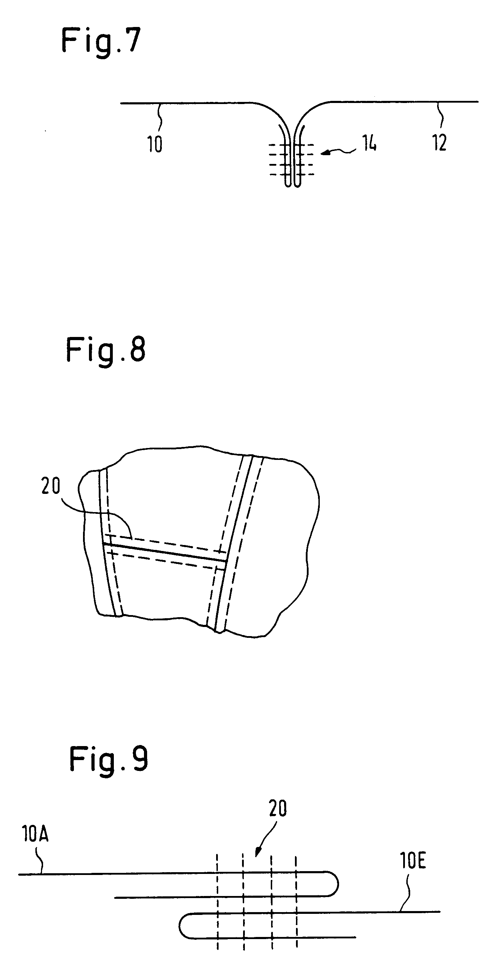

Bei der Ausführungsform nach Fig. 7 ist sowohl der Randstreifenbereich der Umfangsgewebebahn 10 als auch der des Seitenteils 12 verbreitert und auf sich selbst zurückgefaltet ausgeführt. Wie bei den zuvor beschriebenen Ausführungsformen erstreckt sich die Naht auch durch die umgefalteten Randstreifenbereiche hindurch.

Fig. 8 und Fig. 9 zeigen eine Ausführungsform einer Naht 20, welche Anfang und Ende der Umfangsgewebebahn 10 miteinander verbindet. Der Anfang 10A der Umfangsgewebebahn 10 ist an seinem Rand und zur Innenseite des Gassacks hin auf sich selbst zurück umgefaltet. In gleicher Weise ist der Randbereich des Endes 10E zur Innenseite des Gassacks und auf sich selbst zurück umgefaltet. Die so umgefalteten Randbereiche des Anfangs 10A und des Endes 10E der Umfangsgewebebahn 10 sind übereinandergelegt und durch eine Mehrstich-Zickzacknaht der in Fig. 4 gezeigten Art miteinander verbunden.

Bei allen Ausführungsformen mit umgefalteten Randbereichen, durch welche sich die Mehrstich-Zickzacknaht erstreckt, kann eine besonders wirksame Sicherung der übereinanderliegenden Gewebeteile gegen Relativverschiebung festgestellt werden, da unter Zugbeanspruchung ein Selbsthemmungseffekt eintritt.

Die bei allen Ausführungsformen festgestellte Verbesserung der mechanischen Beanspruchbarkeit ist offenbar darauf zurückzuführen, daß die quer zur Längsrichtung der Naht versetzten Stiche die Beanspruchung auf mehrere Gewebefäden verteilen, während bei gerader Naht einige wenige Fäden besonders hoch belastet werden.

Die Verbesserung der thermischen Beanspruchbarkeit geht offenbar mit der verbesserten Dichtheit der Nahtstelle einher. Bei mangelnder Dichtheit, wie sie bei einer herkömmlichen Naht insbesondere an den Einstichstellen beobachtet wird, wird das Gewebematerial durch die dort ausströmenden heißen Gase bis nahe an den Erweichungspunkt oder darüber erhitzt, da an den Einstichstellen wegen des erhöhten Materialstroms viel Wärme abgegeben wird. Durch die erfindungsgemäße Ausbildung der Naht wird dieser Effekt weitgehend vermieden.

## Patentansprüche

1. Gassack für ein Rückhaltesystem in Fahrzeugen, aus mehreren miteinander vernähten textilen Gewebeteilen, dadurch gekennzeichnet, daß wenigstens eine der die Gewebeteile (10, 12, 13) verbindenden Nähte (14, 16, 18) als Mehrstich-Zickzacknaht ausgebildet ist.

2. Gassack nach Anspruch 1, der aus einer Umfangsgewebebahn und zwei Seitenteilen besteht, die an ihrem Außenumfang mit je einem Randstreifen der Umfangsgewebebahn durch eine Naht verbunden sind, dadurch gekennzeichnet, daß jede einen Randstreifen der Umfangsgewebebahn (10) mit dem Außenumfang eines Seitenteils (12, 13) verbindende Naht (14, 16) als Mehrstich-Zickzacknaht ausgebildet ist.

3. Gassack nach Anspruch 1 oder 2, dadurch gekennzeichnet, daß die Randstreifen der Gewebeteile (10, 12, 13), die durch die Mehrstich-Zickzacknaht (14, 16) miteinander verbunden sind, im Inneren des Gassacks gelegen sind.

4. Gassack nach einem der vorstehenden Ansprüche, dadurch gekennzeichnet, daß die Randstreifen der Gewebeteile (10, 12, 13), die durch die Mehrstich-Zickzacknaht (14, 16) miteinander verbunden sind, zur Innenseite des Gassacks eingeschlagen und parallel gegeneinander gelegt sind.

5. Gassack nach Anspruch 4, dadurch gekennzeichnet, daß wenigstens einer der zur Innenseite des Gassacks eingeschlagenen Randstreifen nochmals umgefaltet ist und die Mehrstich-Zickzacknaht (14) sich auch durch diesen umgefalteten Randstreifenteil erstreckt.

6. Gassack nach Anspruch 5, dadurch gekennzeichnet, daß beide Randstreifen in derselben Richtung umgefaltet sind.

7. Gassack nach Anspruch 5, dadurch gekennzeichnet, daß nur einer der Randstreifenteile auf sich selbst zurückgefaltet ist.

8. Gassack nach Anspruch 5, dadurch gekennzeichnet, daß beide Randstreifenteile in entgegengesetzte Richtungen und jeweils auf sich selbst zurückgefaltet sind.

9. Gassack nach Anspruch 2, dadurch gekennzeichnet, daß Anfang (10A) und Ende (10E) der Umfangsgewebebahn (10) durch eine Mehrstich-Zickzacknaht (18) miteinander verbunden sind.

10. Gassack nach Anspruch 9, dadurch gekennzeichnet, daß die Randstreifen am Anfang (10A) und am Ende (10E) der Umfangsgewebebahn (10) jeweils zum Inneren des Gassacks umgefaltet und parallel gegeneinandergelegt sind und daß sich die Mehrstich-Zickzacknaht (18) auch durch die umgefalteten Randstreifenteile erstreckt.

11. Gassack nach einem der vorstehenden Ansprüche, dadurch gekennzeichnet, daß die quer zur Längsrichtung der Mehrstich-Zickzacknaht gemessene Breite derselben zwischen zwei aufeinanderfolgenden Seiten der Längsrichtung liegenden Scheiteln (15) der Zickzackform etwa 9 mm beträgt.

## Claims

1. Gas bag for a restraining system in vehicles comprising a plurality of sewn-together textile fabric portions, characterized in that at least one of the seams (14, 16, 18) joining the fabric portions (10, 12, 13) together is formed as multistitch zig-zag seam.

2. Gas bag according to claim 1 consisting of a peripheral fabric web and two side portions which at their outer periphery are each joined by a seam to an edge strip of the peripheral fabric web, characterized in that each seam (14, 16) joining an edge strip of the peripheral fabric web (10) to the outer periphery of a side portion (12, 13) is formed as multistitch zig-zag seam.

3. Gas bag according to claim 1 or 2, characterized in that the edge strips of the fabric portions (10, 12, 13) joined together by the multistitch zig-zag seam (14, 16) are disposed in the interior of the gas bag.

4. Gas bag according to any one of the preceding claims, characterized in that the edge strips of the fabric portions (10, 12, 13) joined together by the multistitch zig-zag seam (14, 16) are placed turned over towards the inner side of the gas bag and parallel to each other.

5. Gas bag according to claim 4, characterized in that at least one of the edge strips folded towards the inner side of the gas bag is folded over again and the multistitch zig-zag seam (14) also extends through said folded-over edge strip portion.

6. Gas bag according to claim 5, characterized in that both edge strips are folded over in the same direction.

7. Gas bag according to claim 5, characterized in that only one of the edge strip portions is folded back on itself.

8. Gas bag according to claim 5, characterized in that the two edge strip portions are folded in opposite directions and each back on itself.

9. Gas bag according to claim 2, characterized in that the start (10A) and end (10E) of the peripheral fabric web (10) are joined together by a multistitch zig-zag seam (18).

10. Gas bag according to claim 9, characterized in that the edge strips at the start (10A) and at the end (10E) of the peripheral fabric web (10) are each folded towards the interior of the gas bag and placed parallel against each other and that the multistitch zig-zag seam (18) also extends through the folded-over edge strip portions.

11. Gas bag according to any one of the preceding claims, characterized in that the width of the multistitch zig-zag seam measured transversely of the longitudinal direction between two successive sides of the longitudinally disposed apices (15) of the zig-zag form is about 9 mm.

## Revendications

1. Coussin gonflable pour un système de retenue dans des véhicules, constitué de plusieurs morceaux de tissu textile cousus entre eux, caractérisé en ce qu'au moins l'une des coutures (14, 16, 18) reliant les morceaux de tissu (10, 12, 13) est conçue sous la forme d'une couture en zigzag à plusieurs points.

2. Coussin gonflable selon la revendication 1, constitué d'un lé de tissu périphérique et de deux morceaux latéraux qui, au niveau de leur périphérie extérieure, sont reliés chacun avec une bande de bord du lé de tissu périphérique par une couture, caractérisé en ce que chaque couture (14, 16) reliant une bande de bord du lé de tissu périphérique (10) à la périphérie extérieure d'un morceau latéral (12, 13) est conçue sous la forme d'une couture en zigzag à plusieurs points.

3. Coussin gonflable selon la revendication 1 ou 2, caractérisé en ce que les bandes de bord des morceaux de tissu (10, 12, 13) reliés entre eux par la couture en zigzag (14, 16) à plusieurs points se trouvent à l'intérieur du coussin gonflable.

4. Coussin gonflable selon l'une des revendications précédentes, caractérisé en ce que les bandes de bord des morceaux de tissu (10, 12, 13) reliés entre eux par la couture en zigzag (14, 16) à plusieurs points sont rabattues vers le côté intérieur du coussin gonflable et appliquées parallèlement l'une contre l'autre.

5. Coussin gonflable selon la revendication 4, caractérisé en ce qu'au moins l'une des bandes de bord rabattues vers le côté intérieur du coussin gonflable est à nouveau repliée et la couture en zigzag (14) à plusieurs points traverse aussi cette partie repliée formant bande de bord.

6. Coussin gonflable selon la revendication 5, caractérisé en ce que les deux bandes de bord sont repliées dans la même direction.

7. Coussin gonflable selon la revendication 5, caractérisé en ce qu'une seule des parties formant bandes de bord est repliée sur elle-même.

8. Coussin gonflable selon la revendication 5, caractérisé en ce que les deux parties formant bandes de bord sont repliées dans des directions opposées et chacune sur elle-même.

9. Coussin gonflable selon la revendication 2, caractérisé en ce que le début (10A) et la fin (10E) du lé de tissu périphérique (10) sont reliés entre eux par une couture en zigzag (18) à plusieurs points.

10. Coussin gonflable selon la revendication 9, caractérisé en ce que les bandes de bord situées au début (10A) et à la fin (10E) du lé de tissu périphérique (10) sont chacune repliées à l'intérieur du coussin gonflable et appliquées parallèlement l'une contre l'autre, et en ce que la couture en zigzag (18) à plusieurs points traverse aussi les parties repliées formant bandes de bord.

11. Coussin gonflable selon l'une des revendications précédentes, caractérisé en ce que, mesurée transversalement à la direction longitudinale de la couture en zigzag à plusieurs points, la largeur de cette dernière entre deux sommets (15) de la forme en zigzag, situés sur des côtés opposés l'un à l'autre, successifs dans la direction longitudinale est d'environ 9 mm.
